# FASCICULE DE BREVET EUROPEEN

(11) **EP 2 975 363 B1**
(45) Date de publication et mention de la délivrance du brevet: **21.06.2017**
(21) Numéro de dépôt: 15176329.9
(22) Date de dépôt: 10.07.2015
(51) Int. Cl.: G01C 23/00, G07C 5/00, B64D 45/00

(54) **TRAITEMENT DES MESSAGES D'ALARMES ET DE MAINTENANCE D'UN AERONEF**
VERARBEITUNG VON ALARM- UND WARTUNGSMELDUNGEN EINES LUFTFAHRZEUGS
TREATMENT OF ALARM MESSAGES AND MAINTENANCE OF AN AIRCRAFT

(30) Priorité: 18.07.2014 FR 1401622
(43) Date de publication de la demande: 20.01.2016
(73) Titulaire: THALES, 92400 Courbevoie (FR)
(72) Inventeur: FOURNIER, François, 31036 TOULOUSE CEDEX 1 (FR); PEYRAT, Stéphanie, 31036 TOULOUSE CEDEX 1 (FR); HUYNH, Rémi, 31036 TOULOUSE CEDEX 1 (FR)
(74) Mandataire: Lucas, Laurent Jacques

(56) Documents cités:
- US-A- 4 943 919
- US-A1- 2005 149 238
- US-A1- 2007 055 416
- "Electronic Flight Bag: Real-Time Information Across an Airline's Enterprise", , 31 décembre 2008 (2008-12-31), XP055183281, Extrait de l'Internet: URL:http://www.boeing.com/commercial/aerom agazine/articles/qtr_2_08/AERO_Q208_articl e4.pdf [extrait le 2015-04-15]
- ED MCKENNA: "Product Focus: Electronic Flight Bags", INTERNET CITATION, juillet 2012 (2012-07), pages 1-9, XP002717267, Extrait de l'Internet: URL:http://www.aviationtoday.com/av/commer cial/Product-Focus-Electronic-Flight-Bags_ 76596.html#.Upyb3Ky198E [extrait le 2013-12-02]

## Description

### Domaine de l'invention

L'invention concerne le domaine de l'avionique, et en particulier celui du traitement des messages d'alarmes et de maintenance d'un aéronef.

### Etat de la Technique

Les aéronefs comportent de nombreux équipements embarqués électriques, mécaniques et informatiques. Le fonctionnement de ces équipements embarqués, dont les traitements sont nécessaires pour un bon déroulement du vol, sont surveillés notamment par l'équipage de l'aéronef au cours du vol. Toute défaillance d'un des équipements peut être rapportée soit par l'équipage de l'aéronef, soit par l'équipement lui-même, soit par un système de maintenance embarqué auquel l'équipement peut être relié, comme par exemple dans les documents US4943919, US2007/055416, US2005/149238, ou encore les articles "Electronic Flight Bag: Real-Time Information Across an Airline's Enterprise" (Boeing) et "Product Focus: Electronic Flight Bags" (McKenna). De retour au sol toutes les données concernant d'éventuelles défaillances sont collectées puis analysées par une équipe de maintenance au sol.

Un des enjeux de la maintenance d'aéronef est de pouvoir identifier le plus rapidement possible des pannes critiques des équipements embarqués, ainsi que leur provenance afin d'apporter une correction rapide, pour éviter au maximum une immobilisation d'un aéronef au sol, très coûteuse pour les compagnies aériennes.

Dans un avion, les pannes et dysfonctionnements sont étroitement surveillés et traités de manière spécifique. Plusieurs fonctions sont concernées. Les messages de pannes et de maintenance font l'objet de rapports. Le registre de vol ou "Logbook" en anglais permet au pilote d'informer le personnel de maintenance des différents dysfonctionnements de l'avion. En réponse à ces informations fournies par le pilote, les équipes de maintenance consultent la documentation papier ou électronique en rapport avec ces dysfonctionnements.

Dans les systèmes existants, en fonction du contexte spécifique à un avion ou en réponse à la constatation d'une ou de plusieurs alarmes affichées dans le cockpit, le pilote doit renseigner manuellement le logbook papier ou électronique. Par la suite, le personnel de maintenance conduit différentes investigations de manière à effectuer le lien entre les informations fournies par le pilote et les rapports ou informations disponibles au sein du système de maintenance centralisé.

Dans les systèmes existants, les opérations de maintenance sont généralement guidées et conduites par des actions entièrement manuelles de la part du pilote et du personnel de maintenance.

Ces solutions existantes ne sont pas optimisées, présentent des lenteurs et occasionnent des risques d'erreurs.

Il existe un besoin pour des méthodes et des systèmes pour gérer de manière optimale les pannes, alertes et alarmes en vue des opérations de maintenance au sol.

### Résumé de l'invention

Il est divulgué un procédé mis en oeuvre par ordinateur de gestion de messages d'alarmes et de maintenance d'un aéronef, comprenant les étapes consistant à collecter ou recevoir des informations relatives aux messages d'alarmes, de statut de l'avion et de maintenance; et transmettre à un appareil électronique de type EFB ou sac de vol électronique les informations collectées, ledit appareil électronique étant apte à corréler les messages d'alarmes aux messages de maintenance et à associer les descriptions des alarmes avec des liens et des documents électroniques de maintenance.

Dans un développement, l'étape de collecte des informations comprend l'acquisition d'une ou de plusieurs images des équipements avioniques embarqués et l'extraction ultérieure de ces informations desdites images.

L'extraction de données (par exemple textuelles) peut se faire par extraction de données depuis des images ("scraping" en anglais). Peuvent être extraites des données telles que du texte (par OCR, Optical Character Recognition), des valeurs numériques, des positions de curseurs ou de cadran, etc. Des extractions de données ou informations depuis des flux audio sont également possibles (séparément ou en combinaison).

Dans un développement, l'étape de collecte des informations comprend l'écoute des communications sur un bus avionique entre un système de maintenance centralisée CMS et un service d'impression Printer et/ou des équipements au sol de type ACARS ou VHF.

Dans un développement, le procédé comprend en outre une étape de transmission des données collectées depuis le bus avionique vers un EFB ou sac de vol électronique.

Dans un développement, le procédé comprend en outre une étape d'interprétation par l'EFB ou sac de vol électronique des données collectées depuis le bus avionique au moyen d'un modèle de protocoles avioniques.

Dans un développement, le procédé comprend en outre une étape d'association par l'EFB ou sac de vol électronique de la description des messages d'alarmes et de maintenance, ainsi que leur lien avec la documentation électronique.

Dans un développement, au moins un lien est un hyperlien vers un document électronique.

Dans un développement, le procédé comprend en outre une étape de réception par l'EFB ou sac de vol électronique d'une sélection d'un message d'alarme ou de maintenance.

Dans un développement, l'appareil électronique de type EFB comprend des moyens d'interface utilisateur et le procédé comprenant en outre une étape de mise à disposition par lesdits moyens d'interface utilisateur d'une ou de plusieurs procédures de maintenance et/ou de documents appropriés en rapport avec le message d'alarme ou de maintenance sélectionné.

Il est divulgué un produit programme d'ordinateur, comprenant des instructions de code permettant d'effectuer une ou plusieurs étapes du procédé, lorsque ledit programme est exécuté sur un ordinateur.

Il est divulgué un système comprenant des moyens pour mettre en oeuvre une ou plusieurs étapes du procédé.

Avantageusement, des modes de réalisation de l'invention permettent d'établir un lien direct entre le contexte constaté ou observé dans l'avion (alertes, alarmes, pannes) et les alarmes et .les actions requises par le personnel de maintenance. Par exemple, les informations relatives à l'état de l'appareil peuvent être entrées automatiquement (via la connexion avec les systèmes avions en particulier).

Avantageusement, les fonctions "logbook", "maintenance report" et "electronic documentation" installées et accessibles via un appareil électronique portable de type EFB ("Electronic Flight Bag") peuvent récupérer le statut avion, les alarmes et messages de maintenance et proposer au pilote et au personnel de maintenance les procédures de maintenance et/ou les documents appropriés.

Avantageusement, la solution permet d'automatiser et d'intégrer la chaine de traitement des informations (alarme, logbook, maintenance, documentation) sur les avions d'ancienne génération.

Avantageusement, des modes de réalisation permettent de réduire la charge cognitive du pilote et du personnel de maintenance, en les déchargeant de manipulations fastidieuses, diminuant par exemple les contraintes en matière de saisie de données et permettant à la suite une attention plus soutenue en matière de vérification des données et des actions associées.

Avantageusement, différents modes de réalisation de l'invention pourront être implémentés dans les équipements de bord, dans un ou plusieurs EFB, dans la cabine de pilotage ou au sol.

Avantageusement, les modes de réalisation de l'invention permettent ou facilitent une centralisation des données (alarmes, statut avion, maintenance), une vérification et une distribution appropriées des données vérifiées, la proposition pertinente des informations appropriées en matière de fonction logbook, rapport de maintenance report et de documentation électronique.

### Description des figures

Différents aspects et avantages de l'invention vont apparaitre en appui de la description d'un mode préféré d'implémentation de l'invention mais non limitatif, avec référence aux figures ci-dessous :
La figure 1 illustre l'environnement technique global de l'invention;
La figure 2 illustre schématiquement la structure et les fonctions d'un système de maintenance centralisé de type CMS connu;
La figure 3 présente une vue d'ensemble et des exemples d'étapes du procédé selon l'invention;
La figure 4 détaille certains exemples d'étapes du procédé selon l'invention.

### Description détaillée de l'invention

Certains termes et environnements techniques sont définis ci-après.

Un ""Electronic Flight Bag" d'acronyme ou sigle EFB correspond désigne des librairies électroniques embarquées. Généralement traduit par "sac de vol électronique" ou "sacoche de vol électronique" ou "tablette de vol électronique", un EFB est un appareil électronique portable et utilisé par le personnel navigant (par exemple pilotes, maintenance, cabine..). Un EFB peut fournir des informations de vol à l'équipage, aidant celui-ci à effectuer des tâches (avec de moins de papiers). En pratique, il s'agit généralement d'une tablette informatique du commerce. Une ou plusieurs applications permettent la gestion de l'information pour des tâches de gestion de vol. Ces plateformes informatiques d'usage général sont destinées à réduire ou remplacer le matériel de référence sous forme papier, souvent trouvés dans le bagage à main du "Pilot Flight Bag" et dont la manipulation peut être fastidieuse. La documentation papier de référence comprend généralement les manuels de pilotage, les différentes cartes de navigation et les manuels d'opérations au sol. Ces documentations sont avantageusement dématérialisées dans un EFB. En outre, un EFB peut héberger des applications logicielles spécialement conçues pour automatiser des opérations conduites manuellement en temps normal, comme par exemple les calculs de performances de décollage (calcul de vitesse limite, etc).

Différentes classes de matériel EFB existent. Les EFB de classe 1 sont des appareils électroniques portatifs (PED), qui ne sont normalement pas utilisés durant le décollage et les opérations de débarquement. Cette classe d'appareil ne nécessite pas un processus administratif de certification ou d'autorisation particulière. Les appareils EFB de classe 2 sont normalement disposés dans le cockpit, e.g. montés dans une position où ils sont utilisés durant toutes les phases de vol. Cette classe d'appareils nécessite une autorisation d'utilisation préalable. Les appareils de classe 1 et 2 sont considérés comme des appareils électroniques portatifs. Des installations fixes de classe 3, telles que des supports informatiques ou des stations d'accueil fixes installées dans le cockpit des aéronefs exigent généralement l'approbation et une certification de la part du régulateur.

L'acronyme ou sigle FMS correspond à la terminologie anglaise "Flight Management System" et désigne les systèmes de gestion de vol des aéronefs. Lors de la préparation d'un vol ou lors d'un déroutement, l'équipage procède à la saisie de différentes informations relatives au déroulement du vol, typiquement en utilisant un dispositif de gestion de vol d'un aéronef FMS. Un FMS comprend des moyens de saisie et des moyens d'affichage, ainsi que des moyens de calcul. Un opérateur, par exemple le pilote ou le copilote, peut saisir via les moyens de saisie des informations telles que des RTA, ou " waypoints ", associés à des points de cheminement, c'est-à-dire des points à la verticale desquels l'aéronef doit passer. Les moyens de calcul permettent notamment de calculer, à partir du plan de vol comprenant la liste des waypoints, la trajectoire de l'aéronef, en fonction de la géométrie entre les waypoints et/ou des conditions d'altitude et de vitesse.

L'acronyme IHM correspond à Interface Homme-Machine (HMI en anglais, Human Machine Interface). La saisie des informations, et l'affichage des informations saisies ou calculées par les moyens d'affichage, constituent une telle interface homme-machine. Avec des dispositifs de type FMS connus, lorsque l'opérateur saisit un point de cheminement, il le fait via un affichage dédié affiché par les moyens d'affichage. Cet affichage peut éventuellement également afficher des informations relatives à la situation temporelle de l'aéronef vis-à-vis du point de cheminement considéré. L'opérateur peut alors saisir et visualiser une contrainte de temps posée pour ce point de cheminement. De manière générale, les moyens IHM permettent la saisie et la consultation des informations de plan de vol.

Le "Flight Warning System" (FWS) est un système de gestion centralisée des alertes. Les principales fonctions du système de gestion centralisée des alertes sont la collecte des données des systèmes avioniques, la détection des alertes, le filtrage des alertes et l'annonce des alertes. Ce système est capable d'alerter l'équipage, de faire connaître les défauts de l'avion et de lister à l'équipage les procédures à appliquer en réponses aux alertes affichées par le système. Un système centralisé de gestion des alertes constitue un progrès par rapport à des reports d'alertes par sous-systèmes qui ne permettaient pas à l'équipage d'avoir une vue d'ensemble en cas de survenance concomitante de plusieurs alertes. En outre, le système de gestion centralisée des alertes comporte les moyens d'envoyer les alertes détectées et traitées à un système d'enregistrement des données de vol ainsi qu'à un système de maintenance de l'aéronef et de synchroniser les messages audio associés aux alertes. Les systèmes avioniques hébergent aussi leur propre mécanisme de détection d'anomalies fonctionnelles dont le résultat est ensuite transmis directement à la fonction de gestion des alertes. Plus généralement, on distingue la partie "Monitoring", c'est-à-dire de surveillance des anomalies fonctionnelles, hébergée principalement dans les systèmes avioniques et partiellement dans la fonction de gestion des alertes et la fonction "Consolidation" hébergée dans le système de gestion des alertes qui, à un résultat de surveillance, suivant les conditions de vol, associe une alerte.

Le système appelé "Centralized Maintenance System" (CMS) pour système centralisé de maintenance assure en particulier la maintenance d'un aéronef au sol, maintenance qui comprend différentes étapes, comprenant en premier lieu le renseignement par le personnel de bord d'un registre de vol, ou "Logbook" selon le terme anglais consacré, listant l'ensemble des alarmes, anomalies, ou autres événements constatés par l'équipage durant le vol. Tous les aéronefs récents comportent en outre un équipement appelé BITE, pour "Built-In Test Equipment" selon l'acronyme anglais, dont la fonction est de réaliser des tests sur les équipements embarqués à des fins de diagnostique et de mémorisation des événements et alarmes survenues durant le vol. Après le vol, le système de maintenance centralisé de l'avion, du type CFDIU, pour "Centralized Fault Display Interface Unit", ou CMC pour "Centralized Maintenance Computer", établit généralement un compte-rendu de vol, appelé PFR pour "Post Flight Report" selon l'acronyme anglais. Par la suite, l'intervention des personnels de maintenance est fondée sur la prise en considération du Logbook , des tests réalisés par la fonction BITE, du PFR, et éventuellement d'autres éléments liés à l'état général de l'aéronef, tel que déduit d'après le statut des capteurs embarqués, accessible par l'intermédiaire de rapports du type ACMS pour "Aircraft Condition & Monitoring System" en anglais. Les événements mentionnés dans le Logbook et le PFR peuvent exiger des opérations de maintenance. Après avoir consulté le document faisant l'inventaire des équipements nécessaires et suffisants en vue d'effectuer un vol, document désigné sous le terme de MEL pour "Minimum Equipement List" selon l'acronyme anglais, les personnels de maintenance peuvent déduire la nécessité ou non d'effectuer des opérations de maintenance dans l'immédiat. Si des actions de diagnostique doivent être menées, celles-ci sont résumées dans un manuel souvent appelé FIM pour "Fault Isolation Manual" ou TSM pour "Troubleshooting Manual" d'après l'acronyme anglais. Les personnels de maintenance disposent alors de différentes sources documentaires généralement dispersées, et de plusieurs niveaux de documents détaillants les procédures et les différentes tâches individuelles à mener. Les procédures sont détaillées dans une documentation désignée sous le terme d'AMM pour "Aircraft Maintenance Manual" selon l'acronyme anglais. Lorsque des opérations de maintenance doivent être effectuées, des "Jobcards" sont éditées: elles comprennent l'ensemble des tâches qu'un opérateur de maintenance donné doit mener à bien. Des "Checklists" sont également élaborées: elles comprennent une liste d'actions ou de vérifications permettant à l'opérateur de maintenance de s'assurer de la réalisation correcte de ses tâches. Enfin, l'opérateur de maintenance, après avoir effectué sa mission, est généralement tenu de remplir un "Workreport" , qui correspond à une fiche récapitulant l'ensemble des tâches effectivement réalisées par l'opérateur.

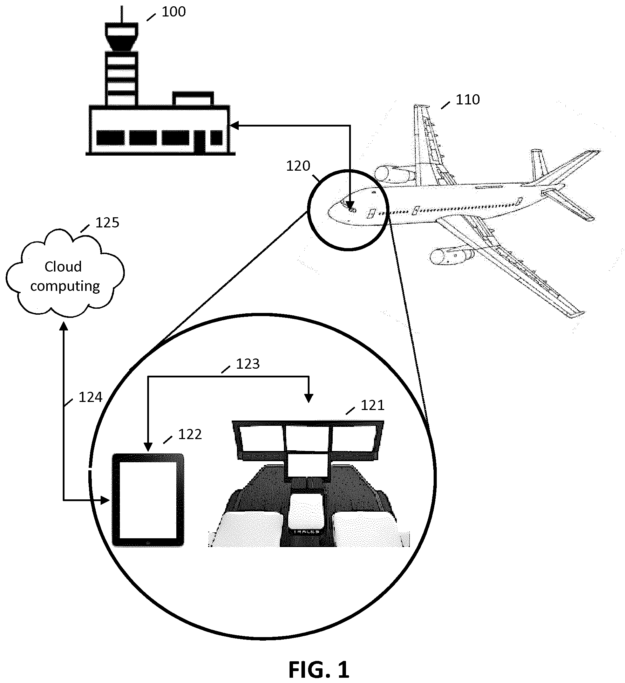

La figure 1 illustre l'environnement technique global de l'invention. Des équipements avioniques ou des moyens aéroportuaires 100 (par exemple une tour de contrôle en lien avec les systèmes de contrôle aérien) sont en communication avec un aéronef 110. Un aéronef est un moyen de transport capable d'évoluer au sein de l'atmosphère terrestre. Par exemple, un aéronef peut être un avion ou un hélicoptère (ou bien encore un drone. L'aéronef comprend un cabine de pilotage ou un cockpit 120. Au sein du cockpit se trouvent des équipements de pilotage 121 (dits équipements avioniques), comprenant par exemple un ou plusieurs calculateurs de bord (moyens de calcul, de mémorisation et de stockage de données), dont un FMS, des moyens d'affichage ou de visualisation et de saisie de données, des moyens de communication, ainsi que (éventuellement) des moyens de retours haptiques. Un EFB 122 peut se trouver à bord, de manière portative ou intégrée dans le cockpit. Ledit EFB peut interagir (communication bilatérale 123) avec les équipements avioniques 121. L'EFB peut également être en communication 124 avec des ressources informatiques externes, accessible par le réseau (par exemple informatique en nuage ou "Cloud computing" 125. En particulier, les calculs peuvent s'effectuer localement sur l'EFB ou de manière partielle ou totale dans les moyens de calculs accessibles par le réseau. Les équipements de bord 121 sont généralement certifiés et régulés tandis que l'EFB 122 et les moyens informatiques connectés 125 ne le sont généralement pas (ou dans une moindre mesure). Cette architecture permet d'injecter de la flexibilité du côté de l'EFB 122 en s'assurant d'une sécurité contrôlée du côté de l'avionique embarquée 121. Plusieurs EFB peuvent être embarqués.

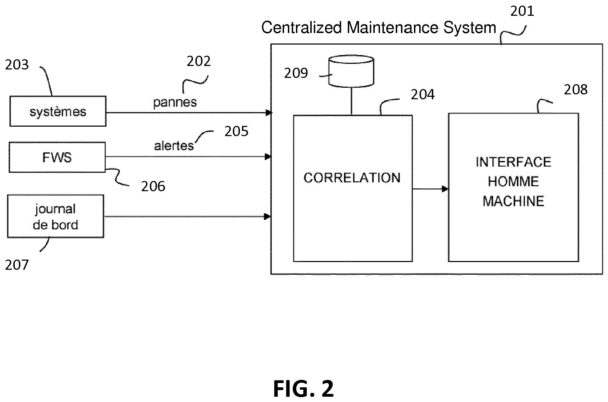

La figure 2 illustre schématiquement la structure et les fonctions dispositif de maintenance centralisé selon l'état de la technique. Le CMS 201 pour "Centralized Maintenance System" signifiant système de maintenance centralisé, reçoit en entrée les données suivantes: des indicateurs de pannes 202, provenant de systèmes ou équipements 203 de l'aéronef; des alertes 205 provenant d'un FWS 206 de l'aéronef, un journal de bord 207 ou logbook tenu par l'équipage de l'aéronef. Le CMS 201 effectue une corrélation temporelle 204 des données reçues 202, 205, 207. Les données corrélées sont ensuite transmise à une première interface homme-machine 208 du premier CMS 201. Le CMS 201 comporte notamment une base de données 209 comportant des données de configuration de l'aéronef qui peuvent être utilisées par la corrélation 204 afin de fournir des informations supplémentaires associées aux données présentées sur l'interface homme machine 208. Un tel système centralisé de maintenance permet un traitement curatif des pannes détectées au cours du vol.

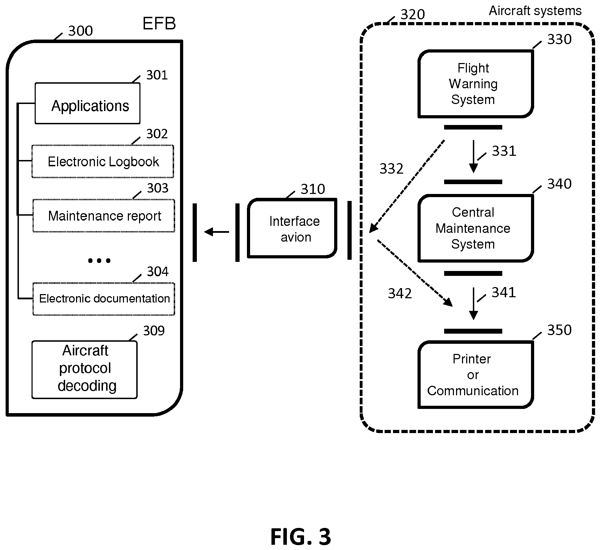

La figure 3 présente une vue d'ensemble et des exemples d'étapes du procédé selon l'invention. Un EFB 300 communique avec des équipements d'interface avion 310, lesquels sont en interaction avec des systèmes avionique 320 ("Aircraft Systems"). L'EFB en particulier peut comprendre une ou plusieurs applications ("app"), chaque application comprenant une ou plusieurs fonctions. L'EFB peut par exemple comprendre une application (ou fonction) de Electronic Logbook 302, une application (ou fonction) de Maintenance Report 303, une application (ou fonction) de documentation électronique ("Electronic Documentation" 304). Les systèmes avionique 320 quant à eux peuvent comprendre, en particulier, le Flight Warning System 330 qui communique 331 avec le Central Maintenance System 340 qui communique 341 avec le Printer ou Communication 350. Le Flight Warning System peut communiquer 332 directement avec l'équipement d'Interface Avion 310, qui à son tour peut communiquer 242 directement avec le Printer 350.

Le système EFB 300 inclut une fonction logbook 302, rapport de maintenance 303 et documentation 304. Il est relié aux équipements avion 310. L'EFB récupère les informations de contexte avion et les alarmes, principalement via la fonction Flight Warning System par le lien entre le Flight Warning System 330 et le système de maintenance centralisé (201, 340) mais aussi via les informations des systèmes de visualisation 350. L'EFB récupère les informations de pannes et alarmes corrélées via le système de maintenance centralisé (201, 340) par le lien entre le système de maintenance centralisée (201, 340) et la fonction imprimante ou communication 350.

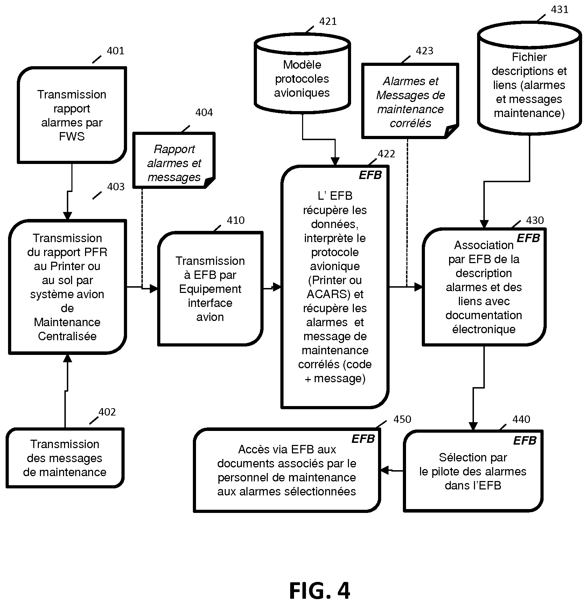

La figure 4 détaille certains exemples d'étapes du procédé selon l'invention. A l'étape 401, le système avion (Flight Warning System) transmet sur le bus avionique (par exemple A429) le rapport des alarmes. Via le FWS, les données comme celles du "statut de l'avion" et les "alarmes" sont collectées. D'autres données peuvent être collectées (par exemple au moyen acquisition d'images ou de captures des écrans du tableau de bord ou des équipements IHM embarqués, lesquelles images ou captures permettent la reconnaissance de caractères ou l'extraction ou l'"évasion" d'informations depuis les instruments de bord embarqués). Selon un mode de réalisation, les informations peuvent être collectées (par exemple) en "espionnant" la communication entre la fonction Printer et la maintenance centralisée. A l'étape 402 (parallèlement, ou séquentiellement, e.g. antérieurement ou postérieurement), les systèmes avionique transmettent (par exemple sur le bus avionique) les messages de maintenance. Ces messages ou données de maintenance sont par exemple collectées depuis les données du "maintenance report" via le système de maintenance centralisée CMS en "espionnant" les communications avec l'imprimante Printer ou la communication bord/sol. A l'étape 403, le système avion (de Maintenance centralisée) transmet sur le bus avionique le rapport Post Flight Report 404 regroupant les alarmes et les messages de maintenance du vol courant pour impression (Printer) ou pour transmission au sol (ACARS, VHF). A l'étape 410, l'équipement d'interface avion récupère les données du bus avionique et les transmet à l'EFB (via USB ou Ethernet par exemple). L'EFB décode et transmet les données avion aux applications installées dans l'EFB. A l'étape 422, l'EFB récupère les données, interprète le protocole avionique (Printer ou ACARS, par exemple au moyen d'un modèle de protocoles avioniques 421) et récupère les alarmes et message de maintenance corrélés (comprenant par exemple des informations de type code et message). Les alarmes et Messages de maintenance corrélés 423 sont traitées par l'EFB: à l'étape 430, l'EFB associe la description des données d'alarmes et de maintenance ainsi que leur lien (par exemple hyperlien) avec la documentation électronique (par exemple au moyen d'un fichier 431 comprenant les descriptions et les liens des alarmes et messages de maintenance. Les fonctions "logbook", "maintenance report" et "electronic documentation" installées et accessibles sur l'EFB peuvent donc récupérer le "statut avion", les "alarmes" et les "messages de maintenance" et proposer au pilote et au personnel de maintenance les procédures de maintenance et/ou les documents appropriés. Par exemple, à l'étape 440, l'EFB rend disponible les alarmes au pilote par exemple via l'application « Technical Logbook » installé sur ledit EFB. Le pilote peut sélectionner une ou plusieurs alarmes (et par exemple le statut avion) par l'intermédiaire du logbook. Enfin à l'étape 450, l'EFB rend disponible au personnel de maintenance les messages de maintenance corrélés aux alarmes sélectionnées par le pilote dans l'application « Technical Logbook » ainsi qu'aux documents associés. Alternativement, le personnel de maintenance peut ouvrir les alarmes sélectionnées, accéder aux messages de maintenance associés (au sein du rapport du système de maintenance centralisé) et enfin accéder (directement) à la documentation avion.

Concernant le mode de collecte des données (401 et 402), un mode de réalisation particulier est décrit ci-après. Une opération de "scraping" correspond à une extraction d'informations au moyen de l'acquisition d'une ou de plusieurs images, et du traitement ultérieur de ces images. L'opération désigne une opération de récupération ou de capture d'informations sur un objet numérique, ladite récupération ou capture n'étant pas prévue d'origine par l'objet numérique. Par exemple, cette récupération d'informations peut comprendre l'acquisition d'une ou de plusieurs images puis la reconnaissance de caractères au sein des images capturées.

Une telle opération "opportuniste" de récupération ou d'évasion ou de capture d'informations permet d'établir un lien entre des systèmes avionique certifiés (c'est-à-dire entre autres contrôlés et régulés, plutôt fermés, dont la sécurité informatique est comparativement plus maîtrisée ou à tout le moins surveillée) et les systèmes non avioniques (systèmes ouverts non certifiés, plus sujets à des attaques informatiques mais corrélativement dont les évolutions sont plus rapides). De façon remarquable, l'opération de récupération ou de capture d'informations est unilatérale: l'extraction d'informations s'effectue depuis les systèmes avionique vers les systèmes ouverts (et pas l'inverse). Par exemple, il n'est pas injecté de données et ou de programmes de non-avionique dans les systèmes avionique (ou alors de manière contrôlée)

Dans le présent contexte avionique, plusieurs modes de réalisation sont décrits. Dans un mode de réalisation, le pilote ou le copilote ou un autre personnel navigant déclenche une acquisition d'images, par exemple au moyen d'une tablette électronique EFB équipée d'un appareil photo. La prise de vue est ensuite analysée, détourée, et les informations capturées sont extraites de l'image. La connaissance préétablie du type d'image capturée permet une reconnaissance spécifique. Par exemple, une alarme affichée sur le FWS sera selon un format préétabli et connu. Par suite la capture d'informations sera optimisée. Dans une variante, la prise de vue sera de type vidéo (c'est-à-dire acquisition d'une succession d'images fixes, le grand nombre d'images capturées permettant notamment une optimisation de la capture d'informations et/ou une robustesse aux mouvements de l'utilisateur portant les moyens d'acquisition d'images. selon un autre mode de réalisation, les moyens d'acquisition d'images sont montés de manière fixe dans le cockpit de l'aéronef. Par ce moyen, la capture ou la récupération d'informations peut s'effectuer de manière continue. Selon un autre mode de réalisation, les moyens d'acquisition d'images peuvent correspondre à des appareils photo ou des caméras vidéo fixées sur des casques de réalité virtuelle ou augmentée.

Dans le cas d'espèce, les informations « alarmes » sont disponibles sur l'écran de visualisation du pilote. Elles sont également disponibles via le MCDU "Multi Purpose Display Unit" en consultant les rapports du calculateur de maintenance centralisée. Ces deux sources IHM permettent une extraction des informations et leur "réinjection" via l'EFB. Les informations de type "message de maintenance" sont également accessibles via le MCDU (en consultant les rapports appropriés). Il est enfin possible de procéder à l'acquisition d'images des dysfonctionnements qui ne sont pas liés à des alarmes mais qui permettent d'appuyer les éventuelles remarques du pilote. Sans qu'il y ait dans ce cas une corrélation « automatique » avec les messages de maintenance, cette source d'information aidera à la compréhension et la résolution des problèmes de maintenance.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique.

## Revendications

1. Procédé mis en oeuvre par ordinateur de gestion de messages d'alarmes et de maintenance d'un aéronef, comprenant l'étape consistant à :
- collecter des informations relatives aux messages d'alarmes, de statut de l'avion et de maintenance;
le procédé étant **caractérisé en ce qu'**il comprend l'étape de:
- transmettre à un appareil électronique de type EFB ou sac de vol électronique les informations collectées, ledit appareil électronique étant apte à corréler les messages d'alarmes aux messages de maintenance et à associer les descriptions des alarmes avec des liens et des documents électroniques de maintenance.

2. Procédé selon la revendication 1, l'étape de collecte des informations comprenant l'acquisition d'une ou de plusieurs images des équipements avioniques embarqués et l'extraction ultérieure de ces informations desdites images.

3. Procédé selon la revendication 1, l'étape de collecte des informations comprenant l'écoute des communications sur un bus avionique entre un système de maintenance centralisée CMS et un service d'impression Printer et/ou des équipements au sol de type ACARS ou VHF.

4. Procédé selon la revendication 3, comprenant en outre une étape de transmission des données collectées depuis le bus avionique vers un EFB ou sac de vol électronique.

5. Procédé selon la revendication 4, comprenant en outre une étape d'interprétation par l'EFB ou sac de vol électronique des données collectées depuis le bus avionique au moyen d'un modèle de protocoles avioniques.

6. Procédé selon la revendication 5, comprenant en outre une étape d'association par l'EFB ou sac de vol électronique de la description des messages d'alarmes et de maintenance, ainsi que leur lien avec la documentation électronique.

7. Procédé selon la revendication 6, au moins un lien étant un hyperlien vers un document électronique.

8. Procédé selon la revendication 6 ou 7, comprenant en outre une étape de réception par l'EFB ou sac de vol électronique d'une sélection d'un message d'alarme ou de maintenance.

9. Procédé selon la revendication 8, l'appareil électronique de type EFB comprenant des moyens d'interface utilisateur et le procédé comprenant en outre une étape de mise à disposition par lesdits moyens d'interface utilisateur d'une ou de plusieurs procédures de maintenance et/ou de documents appropriés en rapport avec le message d'alarme ou de maintenance sélectionné.

10. Produit programme d'ordinateur, comprenant des instructions de code permettant d'effectuer les étapes du procédé selon l'une quelconque des revendications 1 à 9, lorsque ledit programme est exécuté sur un ordinateur.

11. Système comprenant des moyens pour mettre en oeuvre les étapes du procédé selon l'une quelconque des revendications 1 à 9.

## Patentansprüche

1. Verfahren zum Ausführen durch einen Computer zum Verwalten von Alarm- und Wartungsmeldungen eines Flugzeugs, das die folgenden Schritte umfasst:
- Sammeln von Informationen in Bezug auf Alarm-, Flugzeugstatus- und Wartungsmeldungen;
wobei das Verfahren **dadurch gekennzeichnet ist, dass** es den folgenden Schritt umfasst:
- Senden der gesammelten Informationen zu einem elektronischen Gerät des Typs EFB oder elektronischer Pilotenkoffer, wobei das elektronische Gerät die Alarmmeldungen mit den Wartungsmeldungen korrelieren kann und die Beschreibungen der Alarme mit Links und elektronischen Wartungsdokumenten assoziieren kann.

2. Verfahren nach Anspruch 1, wobei der Schritt des Sammelns von Informationen das Erfassen eines oder mehrerer Bilder von an Bord befindlicher Avionik-Ausrüstung und das spätere Extrahieren dieser Informationen von den Bildern umfasst.

3. Verfahren nach Anspruch 1, wobei der Schritt des Sammelns von Informationen das Abhören von Kommunikationen auf einem Avionikbus zwischen einem zentralisierten Wartungssystem CMS und einem Druckdienst Printer und/oder Bodengeräten des ACARS- oder VHF-Typs umfasst.

4. Verfahren nach Anspruch 3, das ferner einen Schritt des Sendens von gesammelten Daten von dem Avionikbus zu einem EFB oder elektronischen Pilotenkoffer umfasst.

5. Verfahren nach Anspruch 4, das ferner einen Schritt des Interpretierens, durch den EFB oder elektronischen Pilotenkoffer, von Daten umfasst, die von dem Avionikbus mittels eines Modells von Avionik-Protokollen gesammelt wurden.

6. Verfahren nach Anspruch 5, das ferner einen Schritt des Assoziierens, durch den EFB oder elektrischen Pilotenkoffer, der Beschreibung von Alarm- und Wartungsmeldungen sowie deren Verbindung mit der elektronischen Dokumentation umfasst.

7. Verfahren nach Anspruch 6, wobei wenigstens eine Verbindung eine Hyperlink zu einem elektronischen Dokument ist.

8. Verfahren nach Anspruch 6 oder 7, das ferner einen Schritt des Empfangens, durch den EFB oder elektronischen Pilotenkoffer, einer Wahl einer Alarm- oder Wartungsmeldung umfasst.

9. Verfahren nach Anspruch 8, wobei das elektronische Gerät des EFB-Typs Benutzeroberflächeneinrichtungen umfasst und das Verfahren ferner einen Schritt des Bereitstellens, durch die Benutzeroberflächeneinrichtungen, von einem oder mehreren Wartungsverfahren und/oder Dokumenten umfasst, die mit Bezug auf die gewählte Alarm- oder Wartungsmeldung angemessen sind.

10. Computerprogrammprodukt, das Code-Anweisungen umfasst, die es zulassen, die Schritte des Verfahrens nach einem der Ansprüche 1 bis 9 auszuführen, wenn das Programm auf einem Computer ausgeführt wird.

11. System, das Mittel zum Ausführen der Schritte des Verfahrens nach einem der Ansprüche 1 bis 9 umfasst.

## Claims

1. A computer-implemented method for managing alarm and maintenance messages of an aircraft, comprising the step consisting in:
- collecting information relating to the alarm, aircraft status and maintenance messages;
the method being **characterised in that** it comprises the step of:
- transmitting the information collected to an electronic device of EFB or Electronic Flight Bag type, said electronic device being able to correlate the alarm messages with the maintenance messages and to associate the descriptions of the alarms with links and electronic maintenance documents.

2. The method according to Claim 1, the step of collecting the information comprising the acquisition of one or more images of the onboard avionics equipment and the subsequent extraction of this information from said images.

3. The method according to Claim 1, the step of collecting the information comprising listening to communications on an avionics bus between a Centralised Maintenance System CMS and a printing service Printer and/or ground equipment of ACARS or VHF type.

4. The method according to Claim 3, further comprising a step of transmitting the data collected from the avionics bus to an EFB or Electronic Flight Bag.

5. The method according to Claim 4, further comprising a step of interpretation by the EFB or Electronic Flight Bag of the data collected from the avionics bus by means of a model of avionics protocols.

6. The method according to Claim 5, further comprising a step of association by the EFB or Electronic Flight Bag of the description of the alarm and maintenance messages, as well as their link with the electronic documentation.

7. The method according to Claim 6, at least one link being a hyperlink to an electronic document.

8. The method according to Claim 6 or 7, further comprising a step of reception by the EFB or Electronic Flight Bag of a selection of an alarm or maintenance message.

9. The method according to Claim 8, the electronic device of EFB type comprising user interface means and the method further comprising a step of making available by said user interface means one or more appropriate maintenance procedure(s) and/or document(s) in relation to the alarm or maintenance message selected.

10. A computer programme product, comprising code instructions making it possible to perform the steps of the method according to any of Claims 1 to 9, when said programme is executed on a computer.

11. A system comprising means for implementing the steps of the method according to any of Claims 1 to 9.
